(19) Europäisches Patentamt
European Patent Office
Office européen des brevets

(11) **EP 1 795 726 A1**

(12) **EUROPEAN PATENT APPLICATION**
published in accordance with Art. 158(3) EPC

(43) Date of publication:
**13.06.2007 Bulletin 2007/24**

(21) Application number: **05782198.5**

(22) Date of filing: **06.09.2005**

(51) Int Cl.:
**F02D 29/02** (2006.01)

(86) International application number:
**PCT/JP2005/016316**

(87) International publication number:
**WO 2006/028079 (16.03.2006 Gazette 2006/11)**

(84) Designated Contracting States:
**DE FR**

(30) Priority: **07.09.2004 JP 2004260023**

(71) Applicant: **TOYOTA JIDOSHA KABUSHIKI KAISHA**
**Toyota-shi,**
**Aichi-ken 471-8571 (JP)**

(72) Inventor: **KIKUCHI, Yoshiaki**
**Toyota Jaidosha Kabushiki Kaisha**
**Toyota-shi,**
**Aichi 471-8571 (JP)**

(74) Representative: **Intes, Didier Gérard André et al**
**Cabinet Beau de Loménie,**
**158, rue de l'Université**
**75340 Paris Cedex 07 (FR)**

(54) **POWER OUTPUT UNIT, AUTOMOBILE HAVING SAME, AND METHOD OF CONTROLLING POWER OUTPUT UNIT**

(57) When the current input and output charge levels of a battery are out of allowable input and output ranges, the drive control of the invention uses an operation curve under battery restriction, which sets the higher rotation speed in a low power range and has a smaller variation in rotation speed against a variation of output power than an operation curve in the ordinary state, to set a target rotation speed Ne* and a target torque Te* of an engine and controls the engine and motors MG1 and MG2. Application of this operation curve under battery restriction enhances the response of the engine to a variation of engine power demand Pe* and decreases a potential insufficiency of power due to a delayed response of the engine. The battery can thus input and output a required electric power within the ranges of an input limit Win and an output limit Wout to ensure supply of the insufficient power from the motor MG2.

This control enables smooth output of a required power to a driveshaft.

FIG. 6

EP 1 795 726 A1

# Description

## Technical Field

The present invention relates to a power output apparatus, a motor vehicle equipped with the power output apparatus, and a control method of the power output apparatus.

## Background Art

One proposed structure of a power output apparatus includes an engine, a planetary gear unit including a carrier and a ring gear respectively connected with a crankshaft of the engine and with a driveshaft, a first motor linked to a sun gear of the planetary gear unit, a second motor linked to the driveshaft, and a battery having the capability of transmitting electric power to and from the first motor and the second motor (see, for example, Japanese Patent Laid-Open Gazette No. 2004-144041). The power output apparatus of this structure sets a lower limit to a power level of driving the engine at an optimum efficiency and makes control to keep a target engine power at or above the lower limit, in order to enhance the energy efficiency.

## Disclosure of the Invention

In the event of an abrupt change of a power demand under relatively strict input and output limits of the battery, the power output apparatus of this proposed structure may fail to quickly output a required power to the driveshaft. The engine generally has a poorer response than the motor. The motor supplies the power to compensate for an insufficiency of power due to a delayed response of the engine to a change of the power demand. When the motor manages to compensate for the insufficient power within the input and output limits of the battery, the prior art power output apparatus can quickly output the required power to the driveshaft. When the motor fails to compensate for the insufficient power within the input and output limits of the battery in response to an abrupt change of the power demand, however, the prior art power output apparatus can not quickly output the required power to the driveshaft.

The power output apparatus of the invention, the motor vehicle equipped with the power output apparatus, and the control method of the power output apparatus thus aim to ensure quick output of a required power to a driveshaft even in the event of a decrease in output power level of an accumulator unit, such as a secondary battery.

The present invention is directed to a power output apparatus that outputs power to a driveshaft. The power output apparatus includes: an internal combustion engine that has an output shaft and generates power; a power transmission mechanism that is connected with the output shaft of the internal combustion engine and with the driveshaft and transmits at least part of the power of the internal combustion engine to the driveshaft; a motor that is capable of inputting and outputting power from and to the driveshaft; an accumulator that transmits electric power to and from the motor; and a control device including a power demand setting module, a target drive point setting module, and a drive control module. The power demand setting module sets a power demand to be output to the driveshaft. The target drive point setting module sets a target drive point of the internal combustion engine based on a first restriction and the set power demand when a condition of the accumulator is within allowable input and output ranges that depend on rated values of the accumulator, while setting the target drive point of the internal combustion engine based on the set power demand and a second restriction having a smaller variation in rotation speed against a power change rather than the first restriction when the condition of the accumulator is out of the allowable input and output ranges. The drive control module controls the internal combustion engine, the power transmission mechanism, and the motor to drive the internal combustion engine at the set target drive point and to output a power equivalent to the set power demand to the driveshaft.

When the condition of the accumulator is within the allowable input and output ranges depending on the rated values of the accumulator, the power output apparatus of the invention sets the target drive point of the internal combustion engine based on the first restriction and the power demand to be output to the driveshaft and controls the internal combustion engine, the power transmission mechanism, and the motor to drive the internal combustion engine at the set target drive point and to output the power equivalent to the set power demand to the driveshaft. When the condition of the accumulator is out of the allowable input and output ranges, on the other hand, the power output apparatus of the invention sets the target drive point of the internal combustion engine based on the set power demand and the second restriction having a smaller variation in rotation speed against the power change than the first restriction and controls the internal combustion engine, the power transmission mechanism, and the motor to drive the internal combustion engine at the set target drive point and to output a power equivalent to the set power demand to the driveshaft. In the internal combustion engine, the power increase achieved by increasing the output torque generally requires a shorter time period than the power increase achieved by increasing the rotation speed. Setting the target drive point of the internal combustion engine based on the power demand and the second restriction having the smaller variation in rotation speed against the power change enables a quick change of the drive point of the internal combustion engine in response to a change in power demand. Such control desirably reduces a potential insufficiency of power relative to the power demand due to a delayed response of the internal combustion engine. Even when the condition of the accumulator is out of the allowable input and output ranges depending on the rated values of the accumulator, the motor consumes the electric power supplied from the accumulator to compensate for the insufficient power. This arrangement ensures smooth output of the required power to the driveshaft.

In one preferable embodiment of the power output apparatus of the invention, the target drive point setting module uses the second restriction of giving a higher rotation speed in a low power range rather than the first restriction to set the target drive point of the internal combustion engine. In response to a requirement of braking power, the internal combustion engine driven at a higher rotation speed can output a greater braking force. This increases the total braking force output from the internal combustion engine and from the motor. Even when the input restriction of the accumulator lowers the maximum braking force output from the motor, the combined operations of the internal combustion engine and the motor ensure output of the required braking power.

In another preferable embodiment of the power output apparatus of the invention, the target drive point setting module uses the first restriction of enhancing an efficiency of the internal combustion engine to set the target drive point of the internal combustion engine. When the condition of the accumulator is within the allowable input and output ranges depending on the rated values of the accumulator, this arrangement enhances the fuel consumption and accordingly improves the total energy efficiency of the power output apparatus.

In still another preferable embodiment of the power output apparatus of the invention, the target drive point setting module uses at least one of input and output limits of the accumulator, a temperature of the accumulator, and a state of charge of the accumulator as the condition of the accumulator to set the target drive point of the internal combustion engine.

In still another preferable embodiment of the power output apparatus of the invention, the power transmission mechanism transmits at least part of the power of the internal combustion engine to the driveshaft through input and output of electric power and mechanical power, and the accumulator transmits electric power to and from the power transmission mechanism. Here, the power transmission mechanism includes: a three shaft-type power input output module that is linked to three shafts, the output shaft of the internal combustion engine, the driveshaft, and a rotating shaft, and inputs and outputs power from and to a residual one shaft based on powers input from and output to any two shafts among the three shafts; and a generator that inputs and outputs power from and to the rotating shaft. Further, the power transmission mechanism includes a pair-rotor motor that has a first rotor connected to the output shaft of the internal combustion engine and a second rotor connected to the driveshaft, and is driven to rotate through relative rotation of the first rotor to the second rotor.

In still another preferable embodiment of the power output apparatus of the invention, the power transmission mechanism is a transmission that converts power of the output shaft of the internal combustion engine by gear change at a number of speeds or at continuously variable speed and outputs the converted power to the driveshaft.

The present invention is also directed to a motor vehicle that is equipped with the power output apparatus having any of the above structures and arrangements and outputting power to a driveshaft and has an axle mechanically linked to the driveshaft. The power output apparatus includes: an internal combustion engine that has an output shaft and generates power; a power transmission mechanism that is connected with the output shaft of the internal combustion engine and with the driveshaft and transmits at least part of the power of the internal combustion engine to the driveshaft; a motor that is capable of inputting and outputting power from and to the driveshaft; an accumulator that transmits electric power to and from the motor; and a control device that has a power demand setting module, a target drive point setting module, and a drive control module. The power demand setting module sets a power demand to be output to the driveshaft. The target drive point setting module sets a target drive point of the internal combustion engine based on a first restriction and the set power demand when a condition of the accumulator is within allowable input and output ranges that depend on rated values of the accumulator, while setting the target drive point of the internal combustion engine based on the set power demand and a second restriction having a smaller variation in rotation speed against a power change than the first restriction when the condition of the accumulator is out of the allowable input and output ranges. The drive control module controls the internal combustion engine, the power transmission mechanism, and the motor to drive the internal combustion engine at the set target drive point and to output a power equivalent to the set power demand to the driveshaft.

The motor vehicle of the invention is equipped with the power output apparatus having any of the above structures and arrangements and accordingly exerts the similar effects to those of the power output apparatus described above. For example, even when the condition of the accumulator is out of the allowable input and output ranges depending on the rated values of the accumulator, the motor vehicle of this arrangement ensures smooth output of the required power to the driveshaft.

The present invention is also directed to a control method of a power output apparatus. The power output apparatus includes : an internal combustion engine that has an output shaft and generates power; a power transmission mechanism that is connected with the output shaft of the internal combustion engine and with the driveshaft and transmits at least part of the power of the internal combustion engine to the driveshaft; a motor that is capable of inputting and outputting power from and to the driveshaft; an accumulator that transmits electric power to and from the motor. The control method including the steps of: (a) setting a power demand to be output to the driveshaft, (b)setting a target drive point of the internal combustion engine based on a first restriction and the set power demand when a condition of the accumulator is within allowable input and output ranges that depend on rated values of the accumulator, while setting the target drive point of the internal combustion engine based on the set power demand and a second restriction having a smaller variation in rotation speed against a power change than the first restriction when the condition of the accumulator is out of the allowable input and output ranges, and (c) controlling the internal combustion engine, the power transmission mechanism, and the motor to drive the internal combustion engine at the set target drive point and to output a power equivalent to the set power demand to the driveshaft.

When the condition of the accumulator is within the allowable input and output ranges depending on the rated values of the accumulator, the control method of the power output apparatus of the invention sets the target drive point of the internal combustion engine based on the first restriction and the power demand to be output to the driveshaft and controls the internal combustion engine, the power transmission mechanism, and the motor to drive the internal combustion engine at the set target drive point and to output the power equivalent to the set power demand to the driveshaft. When the condition of the accumulator is out of the allowable input and output ranges, on the other hand, the control method of the power output apparatus sets the target drive point of the internal combustion engine based on the set power demand and the second restriction having a smaller variation in rotation speed against the power change than the first restriction and controls the internal combustion engine, the power transmission mechanism, and the motor to drive the internal combustion engine at the set target drive point and to output a power equivalent to the set power demand to the driveshaft. As mentioned above, in the internal combustion engine, the power increase by increasing the output torque generally requires a shorter time period than the power increase by increasing the rotation speed. Setting the target drive point of the internal combustion engine based on the power demand and the second restriction having the smaller variation in rotation speed against the power change enables a quick change of the drive point of the internal combustion engine in response to a change in power demand. Such control desirably reduces the power supply from the motor to compensate for an insufficiency of the power demand due to a delayed response of the internal combustion engine. Even when the condition of the accumulator is out of the allowable input and output ranges depending on the rated values of the accumulator, this arrangement ensures smooth output of the required power to the driveshaft.

**Brief Description of the Drawings**

Fig. 1 schematically illustrates the configuration of a hybrid vehicle in one embodiment of the invention;

Fig. 2 is a flowchart showing a drive control routine executed by a hybrid electronic control unit mounted on the hybrid vehicle of the embodiment;

Fig. 3 shows variations of an input limit Win and an output limit Wout against battery temperature Tb of a battery;

Fig. 4 shows variations of an input limit correction factor and an output limit correction factor against the state of charge SOC of the battery;

Fig. 5 shows one example of a torque demand setting map;

Fig. 6 shows an operation curve of an engine in the ordinary state to set a target rotation speed Ne* and a target torque Te*;

Fig. 7 is an alignment chart showing torque-rotation speed dynamics of respective rotational elements of a power distribution integration mechanism included in the hybrid vehicle of the embodiment;

Fig. 8 shows an operation curve of the engine under battery restriction to set the target rotation speed Ne* and the target torque Te*;

Fig. 9 shows variations in target rotation speed Ne* of the engine 22 against engine power demand Pe*;

Fig. 10 schematically illustrates the configuration of another hybrid vehicle in one modified example; and

Fig. 11 schematically illustrates the configuration of still another hybrid vehicle in another modified example.

**Best Modes of Carrying Out the Invention**

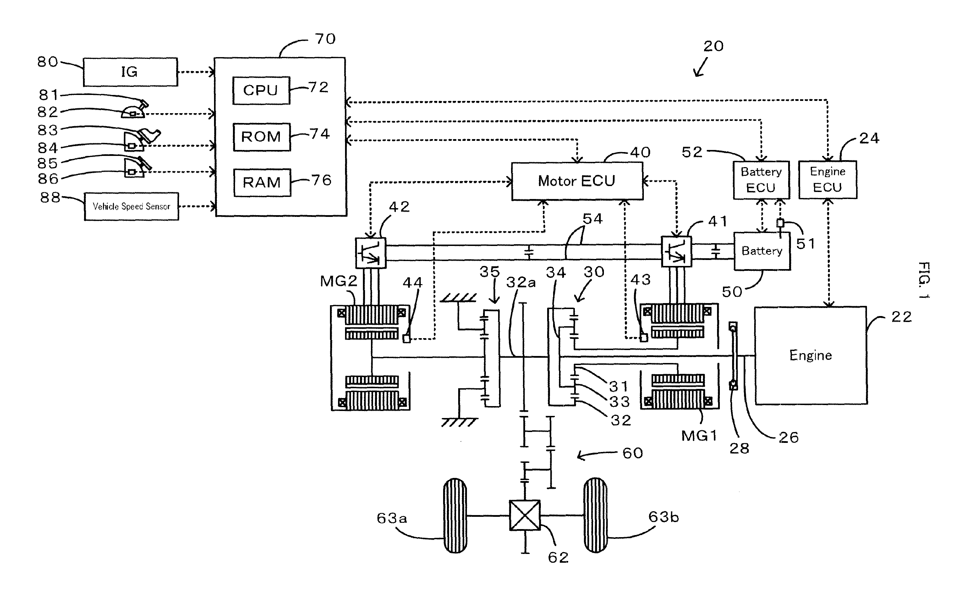

One mode of carrying out the invention is discussed below as a preferred embodiment. Fig. 1 schematically illustrates the construction of a hybrid vehicle 20 with a power output apparatus mounted thereon in one embodiment of the invention. As illustrated, the hybrid vehicle 20 of the embodiment includes an engine 22, a three shaft-type power distribution integration mechanism 30 that is linked with a crankshaft 26 functioning as an output shaft of the engine 22 via a damper 28, a motor MG1 that is linked with the power distribution integration mechanism 30 and is capable of generating electric power, a reduction gear 35 that is attached to a ring gear shaft 32a functioning as a drive shaft connected with the power distribution integration mechanism 30, another motor MG2 that is linked with the reduction gear 35, and a hybrid electronic control unit 70 that controls the whole power output apparatus.

The engine 22 is an internal combustion engine that uses a hydrocarbon fuel, such as gasoline or light oil, to output power. An engine electronic control unit (hereafter referred to as engine ECU) 24 receives signals from diverse sensors that detect operating conditions of the engine 22, and takes charge of operation control of the engine 22, for example, fuel injection control, ignition control, and intake air flow regulation. The engine ECU 24 communicates with the hybrid electronic control unit 70 to control operations of the engine 22 in response to control signals transmitted from the hybrid electronic control unit 70 while outputting data relating to the operating conditions of the engine 22 to the hybrid electronic control unit 70 according to the requirements.

The power distribution and integration mechanism 30 has a sun gear 31 that is an external gear, a ring gear 32 that is an internal gear and is arranged concentrically with the sun gear 31, multiple pinion gears 33 that engage with the sun gear 31 and with the ring gear 32, and a carrier 34 that holds the multiple pinion gears 33 in such a manner as to allow free revolution thereof and free rotation thereof on the respective axes. Namely the power distribution and integration mechanism 30 is constructed as a planetary gear mechanism that allows for differential motions of the sun gear 31, the ring gear 32, and the carrier 34 as rotational elements. The carrier 34, the sun gear 31, and the ring gear 32 in the power distribution and integration mechanism 30 are respectively coupled with the crankshaft 26 of the engine 22, the motor MG1, and the reduction gear 35 via ring gear shaft 32a. while the motor MG1 functions as a generator, the power output from the engine 22 and input through the carrier 34 is distributed into the sun gear 31 and the ring gear 32 according to the gear ratio. While the motor MG1 functions as a motor, on the other hand, the power output from the engine 22 and input through the carrier 34 is combined with the power output from the motor MG1 and input through the sun gear 31 and the composite power is output to the ring gear 32. The power output to the ring gear 32 is thus finally transmitted to the driving wheels 63a and 63b via the gear mechanism 60, and the differential gear 62 from ring gear shaft 32a.

Both the motors MG1 and MG2 are known synchronous motor generators that are driven as a generator and as a motor. The motors MG1 and MG2 transmit electric power to and from a battery 50 via inverters 41 and 42. Power lines 54 that connect the inverters 41 and 42 with the battery 50 are constructed as a positive electrode bus line and a negative electrode bus line shared by the inverters 41 and 42. This arrangement enables the electric power generated by one of the motors MG1 and MG2 to be consumed by the other motor. The battery 50 is charged with a surplus of the electric power generated by the motor MG1 or MG2 and is discharged to supplement an insufficiency of the electric power. When the power balance is attained between the motors MG1 and MG2, the battery 50 is neither charged nor discharged. Operations of both the motors MG1 and MG2 are controlled by a motor electronic control unit (hereafter referred to as motor ECU) 40. The motor ECU 40 receives diverse signals required for controlling the operations of the motors MG1 and MG2, for example, signals from rotational position detection sensors 43 and 44 that detect the rotational positions of rotors in the motors MG1 and MG2 and phase currents applied to the motors MG1 and MG2 and measured by current sensors (not shown). The motor ECU 40 outputs switching control signals to the inverters 41 and 42. The motor ECU 40 communicates with the hybrid electronic control unit 70 to control operations of the motors MG1 and MG2 in response to control signals transmitted from the hybrid electronic control unit 70 while outputting data relating to the operating conditions of the motors MG1 and MG2 to the hybrid electronic control unit 70 according to the requirements.

The battery 50 is under control of a battery electronic control unit (hereafter referred to as battery ECU) 52. The battery ECU 52 receives diverse signals required for control of the battery 50, for example, an inter-terminal voltage measured by a voltage sensor (not shown) disposed between terminals of the battery 50, a charge-discharge current measured by a current sensor (not shown) attached to the power line 54 connected with the output terminal of the battery 50, and a battery temperature Tb measured by a temperature sensor 51 attached to the battery 50. The battery ECU 52 outputs data relating to the state of the battery 50 to the hybrid electronic control unit 70 via communication according to the requirements. The battery ECU 52 calculates a state of charge (SOC) of the battery 50, based on the accumulated charge-discharge current measured by the current sensor, for control of the battery 50.

The hybrid electronic control unit 70 is constructed as a microprocessor including a CPU 72, a ROM 74 that stores processing programs, a RAM 76 that temporarily stores data, and a non-illustrated input-output port, and a non-illustrated communication port. The hybrid electronic control unit 70 receives various inputs via the input port: an ignition signal from an ignition switch 80, a gearshift position SP from a gearshift position sensor 82 that detects the current position of a gearshift lever 81, an accelerator opening Acc from an accelerator pedal position sensor 84 that measures a step-on amount of an accelerator pedal 83, a brake pedal position BP from a brake pedal position sensor 86 that measures a step-on amount of a brake pedal 85, and a vehicle speed V from a vehicle speed sensor 88. The hybrid electronic control unit 70 communicates with the engine ECU 24, the motor ECU 40, and the battery ECU 52 via the communication port to transmit diverse control signals and data to and from the engine ECU 24, the motor ECU 40, and the battery ECU 52, as mentioned previously.

The hybrid vehicle 20 of the embodiment thus constructed calculates a torque demand to be output to the ring gear shaft 32a functioning as the drive shaft, based on observed values of a vehicle speed V and an accelerator opening Acc, which corresponds to a driver's step-on amount of an accelerator pedal 83. The engine 22 and the motors MG1 and MG2 are subjected to operation control to output a required level of power corresponding to the calculated torque demand to the ring gear shaft 32a. The operation control of the engine 22 and the motors MG1 and MG2 selectively effectuates one of a torque conversion drive mode, a charge-discharge drive mode, and a motor drive mode. The torque conversion drive mode controls the operations of the engine 22 to output a quantity of power equivalent to the required level of power, while driving and controlling the motors MG1 and MG2 to cause all the power output from the engine 22 to be subjected to torque conversion by means of the power distribution integration mechanism 30 and the motors MG1 and MG2 and output to the ring gear shaft 32a. The charge-discharge drive mode controls the operations of the engine 22 to output a quantity of power equivalent to the sum of the required level of power and a quantity of electric power consumed by charging the battery 50 or supplied by discharging the battery 50, while driving and controlling the motors MG1 and MG2 to cause all or part of the power output from the engine 22 equivalent to the required level of power to be subjected to torque conversion by means of the power distribution integration mechanism 30 and the motors MG1 and MG2 and output to the ring gear shaft 32a, simultaneously with charge or discharge of the battery 50. The motor drive mode stops the operations of the engine 22 and drives and controls the motor MG2 to output a quantity of power equivalent to the required level of power to the ring gear shaft 32a.

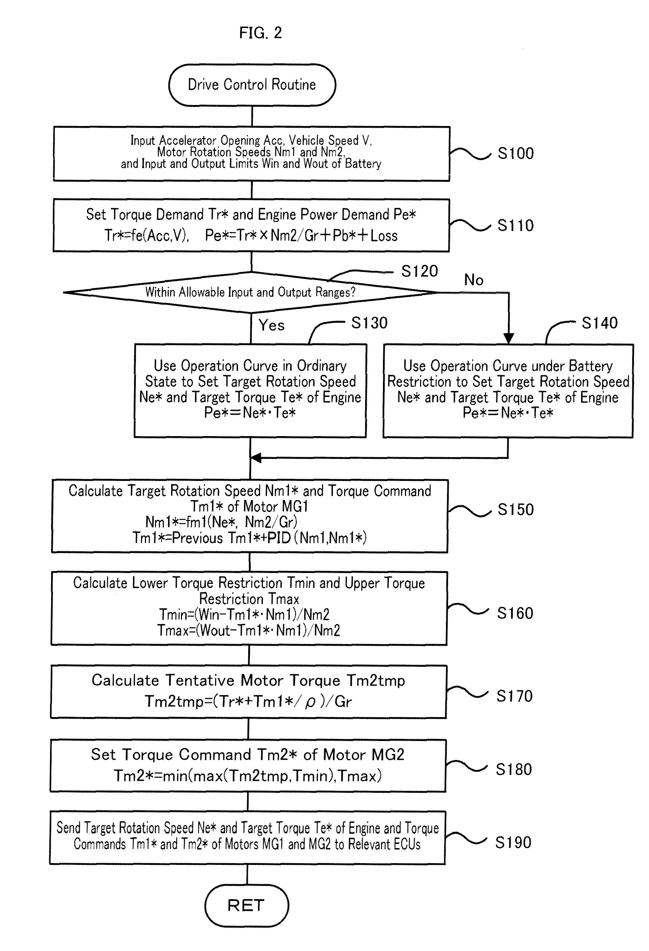

The description regards the operations of the hybrid vehicle 20 of the embodiment having the configuration discussed above. Fig. 2 is a flowchart showing a drive control routine executed by the hybrid electronic control unit 70 in the hybrid vehicle 20 of the embodiment. This drive control routine is performed repeatedly at preset time intervals, for example, at every several msec.

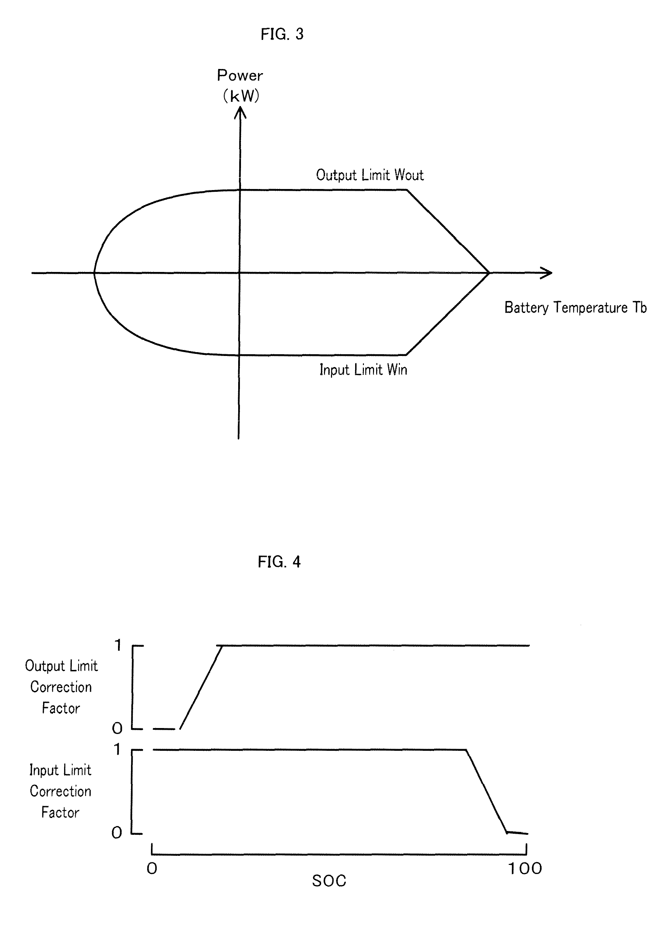

In the drive control routine of Fig. 2, the CPU 72 of the hybrid electronic control unit 70 first inputs various data required for control, that is, the accelerator opening Acc from the accelerator pedal position sensor 84, the vehicle speed V from the vehicle speed sensor 88, rotation speeds Nm1 and Nm2 of the motors MG1 and MG2, and an input limit Win and an output limit Wout of the battery 50 (step S100). The rotation speeds Nm1 and Nm2 of the motors MG1 and MG2 are computed from the rotational positions of the respective rotors in the motors MG1 and MG2 detected by the rotational position detection sensors 43 and 44 and are received from the motor ECU 40 by communication. The input limit Win and the output limit Wout of the battery 50 are set based on the battery temperature Tb and the state of charge SOC of the battery 50 and are received from the battery ECU 52 by communication. A concrete procedure of computing the input and output limits Win and Wout of the battery 50 sets base values of the input limit Win and the output limit Wout corresponding to the battery temperature Tb of the battery 50 measured by the temperature sensor 51, specifies an input limit correction factor and an output limit correction factor corresponding to the state of charge SOC of the battery 50, and multiplies the base values of the input limit Win and the output limit Wout by the specified input limit correction factor and output limit correction factor to determine the input limit Win and the output limit Wout of the battery 50. Fig. 3 shows variations of the input limit Win and the output limit Wout against the battery temperature Tb. Fig. 4 shows variations of the input limit correction factor and the output limit correction factor against the state of charge SOC of the battery 50.

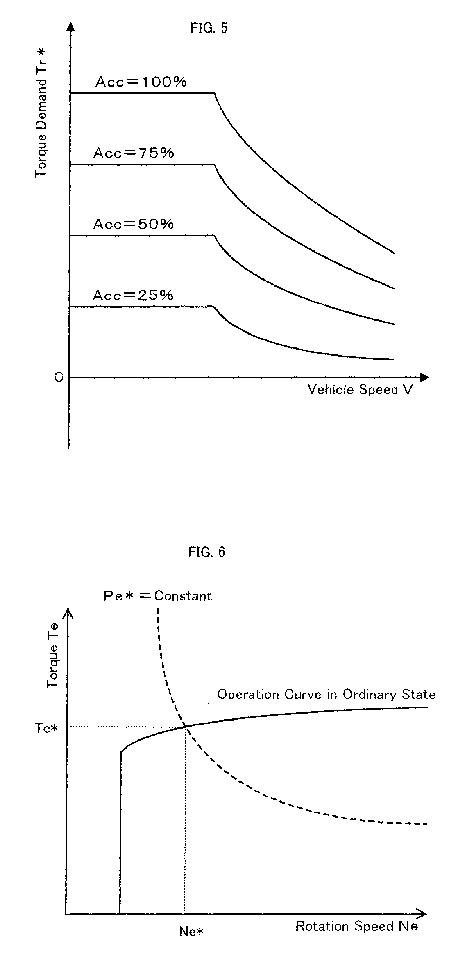

After the data input, the CPU 72 sets a torque demand Tr* to be output to the ring gear shaft 32a or a driveshaft linked with the drive wheels 63a and 63b as a torque required for the hybrid vehicle 20 and an engine power demand Pe* to be output from the engine 22, based on the input accelerator opening Acc and the input vehicle speed V (step S110). A concrete procedure of setting the torque demand Tr* in this embodiment stores in advance variations in torque demand Tr* against the accelerator opening Acc and the vehicle speed V as a torque demand setting map in the ROM 74 and reads the torque demand Tr* corresponding to the given accelerator opening Acc and the given vehicle speed V from this torque demand setting map. One example of the torque demand setting map is shown in Fig. 5. The engine power demand Pe* is calculated as the sum of the product of the torque demand Tr* and a rotation speed Nr of the ring gear shaft 32a, a charge-discharge power demand Pb* to be charged into or discharged from the battery 50, and a potential loss. The rotation speed Nr of the ring gear shaft 32a is obtained by multiplying the vehicle speed V by a preset conversion factor k or by dividing the rotation speed Nm2 of the motor MG2 by a gear ratio Gr of the reduction gear 35.

The CPU 72 subsequently compares the input limit Win and the output limit Wout of the battery 50 respectively with a reference input value Wref1 and with a reference output value Wref2 and accordingly determines whether current input and output charge levels of the battery 50 are within allowable input and output ranges, which are based on rated input and output values of the battery 50 (step S120). The reference input value Wref1 represents a lower limit of the allowable input range based on a rated maximum input level of the battery 50 and is, for example, 95% or 90% of the rated maximum input level. The reference output value Wref2 represents a lower limit of the allowable output range based on a rated maximum output level of the battery 50 and is, for example, 95% or 90% of the rated maximum output level. The states within the allowable input range and within the allowable output range thus mean that the input limit Win of the battery 50 is not higher than the reference input value Wref1 and that the output limit Wout of the battery 50 is not lower than the reference output value Wref2. When the current input and output charge levels of the battery 50 are determined to be within the allowable input and output ranges at step S120, the CPU 72 sets a target rotation speed Ne* and a target torque Te* of the engine 22 according to the engine power demand Pe* and an efficient operation curve of the engine 22 in the ordinary state (step S130). The operation curve in the ordinary state is a line connecting drive points of highest efficiency among drive points of the engine 22 that are set to output an identical power, with a variation in output power. Fig. 6 shows one example of the operation curve of the engine 22 in the ordinary state to set the target rotation speed Ne* and the target torque Te*. As clearly shown in Fig. 6, the target rotation speed Ne* and the target torque Te* are given as an intersection of the operation curve in the ordinary state and a curve of constant engine power demand Pe* shown by the broken line.

The CPU 72 calculates a target rotation speed Nm1* of the motor MG1 from the target rotation speed Ne* of the engine 22, the rotation speed Nr (= Nm2/Gr) of the ring gear shaft 32a, and a gear ratio p of the power distribution integration mechanism 30 according to Equation (1) given below, while calculating a torque command Tm1* of the motor MG1 from the calculated target rotation speed Nm1* and the current rotation speed Nm1 of the motor MG1 according to Equation (2) given below (step S150):

$$Nm1* = Ne* \cdot (1+\rho)/\rho - Nm2/(Gr \cdot \rho) \qquad (1)$$

$$Tm1* = Previous\ Tm1* + k1(Nm1*-Nm1) + k2\int(Nm1*-Nm1)dt \qquad (2)$$

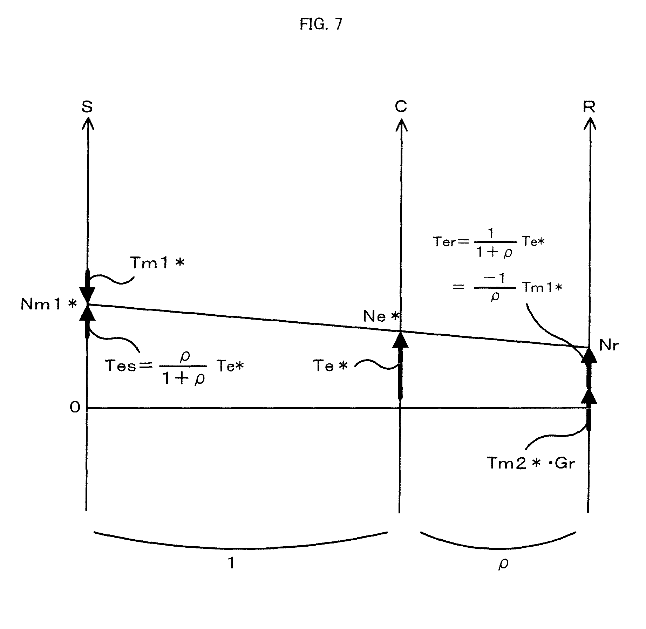

Equation (1) is a dynamic relational expression of the rotation elements included in the power distribution integration mechanism 30. Fig. 7 is an alignment chart showing torque-rotation speed dynamics of the respective rotation elements included in the power distribution integration mechanism 30. The left axis 'S' represents the rotation speed of the sun gear 31 that is equivalent to the rotation speed Nm1 of the motor MG1. The middle axis 'C' represents the rotation speed of the carrier 34 that is equivalent to the rotation speed Ne of the engine 22. The right axis 'R' represents the rotation speed Nr of the ring gear 32 (ring gear shaft 32a) obtained by multiplying the rotation speed Nm2 of the motor MG2 by the gear ratio Gr of the reduction gear 35. Equation (1) is readily introduced from the alignment chart of Fig. 7. Two upward thick arrows on the axis 'R' in Fig. 7 respectively show a torque that is directly transmitted to the ring gear shaft 32a when the torque Te* is output from the engine 22 in steady operation at a specific drive point of the target rotation speed Ne* and the target torque Te*, and a torque that is applied to the ring gear shaft 32a via the reduction gear 35 when a torque Tm2* is output from the motor MG2. Equation (2) is a relational expression of feedback control to drive and rotate the motor MG1 at the target rotation speed Nm1*. In Equation (2) given above, 'k1' in the second term and 'k2' in the third term on the right side respectively denote a gain of the proportional and a gain of the integral term.

After calculation of the target rotation speed Nm1* and the torque command Tm1* of the motor MG1, the CPU 72 calculates a lower torque restriction Tmin and an upper torque restriction Tmax as minimum and maximum torques output from the motor MG2 according to Equations (3) and (4) given below (step S160):

$$Tmin = (Win - Tm1* \cdot Nm1) / Nm2 \qquad (3)$$

$$Tmax = (Wout - Tm1* \cdot Nm1) / Nm2 \qquad (4)$$

The lower torque restriction Tmin and the upper torque restriction Tmax are respectively given by dividing a difference between the input limit Win of the battery 50 and power consumption (power generation) of the motor MG1, which is the product of the torque command Tm1* and the input current rotation speed Nm1 of the motor MG1, and a difference between the output limit Wout of the battery 50 and the power consumption (power generation) of the motor MG1 by the input current rotation speed Nm2 of the motor MG2. The CPU 72 then calculates a tentative motor torque Tm2tmp to be output from the motor MG2 from the torque demand Tr*, the torque command Tm1* of the motor MG1, the gear ratio p of the power distribution integration mechanism 30, and the gear ratio Gr of the reduction gear 35 according to Equation (5) given below (step S170):

$$Tm2tmp = (Tr* + Tm1* / \rho) / Gr \qquad (5)$$

The CPU 72 limits the tentative motor torque Tm2tmp to the range between the calculated lower torque restriction Tmin and upper torque restriction Tmax to set a torque command Tm2* of the motor MG2 (step S180). Setting the torque command Tm2* of the motor MG2 in this manner restricts the torque demand Tr* to be output to the ring gear shaft 32a or the driveshaft within the ranges of the input limit Win and the output limit Wout of the battery 50. Equation (5) is readily introduced from the alignment chart of Fig. 7.

After setting the target rotation speed Ne* and the target torque Te* of the engine 22 and the torque commands Tm1* and Tm2* of the motors MG1 and MG2, the CPU 72 sends the target rotation speed Ne* and the target torque Te* of the engine 22 to the engine ECU 24 and the torque commands Tm1* and Tm2* of the motors MG1 and MG2 to the motor ECU 40 (step S190) and exits from the drive control routine of Fig. 2. The engine ECU 24 receives the target rotation speed Ne* and the target torque Te* and performs fuel injection control and ignition control of the engine 22 to drive the engine 22 at a specified drive point of the target rotation speed Ne* and the target torque Te*. The motor ECU 40 receives the torque commands Tm1* and Tm2* and performs switching control of the switching elements included in the respective inverters 41 and 42 to drive the motor MG1 with the torque command Tm1* and the motor MG2 with the torque command Tm2*.

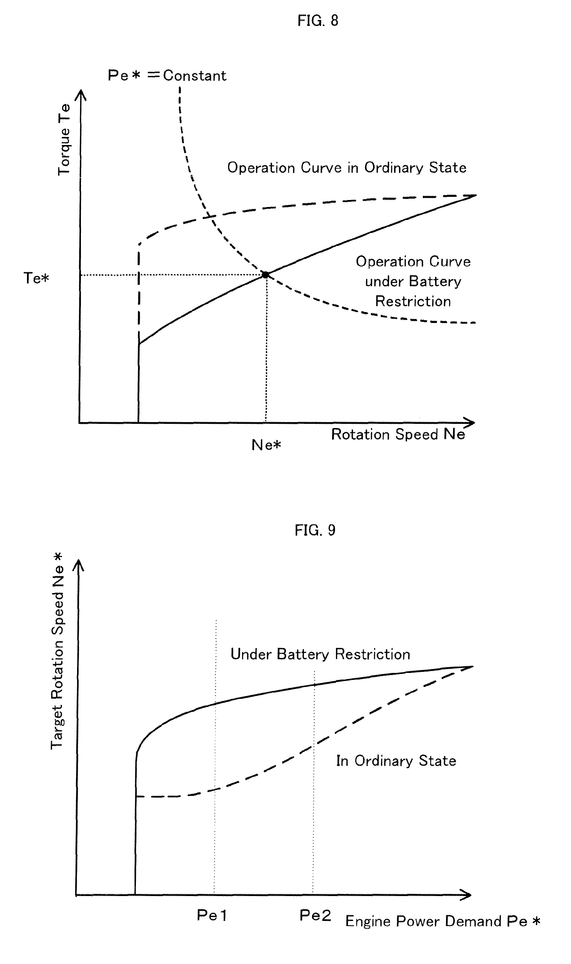

When the current input and output charge levels of the battery 50 are determined to be out of the allowable input and output ranges at step S120, on the other hand, the CPU 72 uses an operation curve under battery restriction to set the target rotation speed Ne* and the target torque Te* of the engine 22 (step S140). The operation curve under battery restriction sets the higher rotation speed in a lower output power range and accordingly has a smaller variation in rotation speed against the variation of the output power, compared with the operation curve in the ordinary state. The CPU 72 subsequently executes processing of steps S150 to S190 as described above and exits from the drive control routine of Fig. 2. Fig. 8 shows one example of the operation curve under battery restriction (given as a solid-line curve), together with the operation curve in the ordinary state (given as a broken-line curve) for the purpose of comparison. Fig. 9 shows a variation in target rotation speed Ne* against the engine power demand Pe* under battery restriction (given as a solid-line curve), together with a variation in target rotation speed Ne* against the engine power demand Pe* in the ordinary state (given as a broken-line curve) for the purpose of comparison. As mentioned above, the operation curve under battery restriction sets the higher rotation speed in the low output power range and has a smaller variation in rotation speed against the variation of the output power, compared with the operation curve in the ordinary state. The target rotation speed Ne* accordingly has a smaller variation against the variation of the engine power demand Pe*. In the engine 22, a change of the rotation speed generally requires a longer time than a change of the torque. Setting the smaller variation in rotation speed against the variation of the engine power demand Pe* enhances the response of the engine 22 to the variation of the engine power demand Pe*. The enhanced response desirably decreases a potential insufficiency of power due to a delayed response of the engine 22. Even when the current input and output charge levels of the battery 50 are out of the allowable input and output ranges, the battery 50 can thus input and output the required electric power within the ranges of the input limit Win and the output limit Wout to ensure supply of the insufficient power from the motor MG2. Such control enables smooth output of the torque demand Tr* to the ring gear shaft 32a or the driveshaft even when the current input and output charge levels of the battery 50 are out of the allowable input and output ranges. The operation curve under battery restriction sets the higher target rotation speed Ne* of the engine 22 than the operation curve in the ordinary state. This allows the engine braking corresponding to the rotation speed to be promptly applied in the state of braking with a negative torque demand Tr* and effectively prevents the battery 50 from being charged with an excessive electric power.

As described above, when the current input and output charge levels of the battery 50 are out of the allowable input and output ranges, the hybrid vehicle 20 of the embodiment uses the operation curve under battery restriction, which has a smaller variation in rotation speed against the variation of the output power than the operation curve in the ordinary state, to set the target rotation speed Ne* and the target torque Te* and controls the engine 22 and the motors MG1 and MG2. Application of this operation curve under battery restriction enhances the response of the engine 22 to the variation of the engine power demand Pe* and decreases a potential insufficiency of power due to a delayed response of the engine 22. The battery 50 can thus input and output the required electric power within the ranges of the input limit Win and the output limit Wout to ensure supply of the insufficient power from the motor MG2. This control enables smooth output of the torque demand Tr* to the ring gear shaft 32a or the driveshaft even when the current input and output charge levels of the battery 50 are out of the allowable input and output ranges. The operation curve under battery restriction sets the higher rotation speed of the engine 22 against the output power, compared with the operation curve in the ordinary state. Such setting allows the greater engine braking under battery restriction than the engine braking in the ordinary state to be promptly applied in the state of braking with a negative torque demand Tr*. This arrangement effectively prevents the battery 50 from being charged with an excessive electric power.

When the current input and output charge levels of the battery 50 are out of the allowable input and output ranges, the hybrid vehicle 20 of the embodiment uses the operation curve under battery restriction, which sets the higher rotation speed in the low output power range and accordingly has a smaller variation in rotation speed against the variation of the output power, compared with the operation curve in the ordinary state. The operation curve under battery restriction may alternatively set the lower rotation speed in a high output power range, compared with the operation curve in the ordinary state.

The hybrid vehicle 20 of the embodiment uses the reference input value Wref1 and the reference output value Wref2 to determine whether the current input and output charge levels of the battery 50 are within the allowable input and output ranges. These reference values Wref1 and Wref2 are set to the lower limits of the allowable input range and the allowable output range based on the rated input level and the rated output level of the battery 50, for example, 95% or 90% of the rated maximum input level and the rated maximum output level. The reference values Wref1 and Wref2 may be set to lower limits of slightly wider ranges than these allowable input and output ranges or may be set to lower limits of slightly narrower ranges than these allowable input and output ranges.

The hybrid vehicle 20 of the embodiment uses the input limit Win and the output limit Wout of the battery 50, which depend on the battery temperature Tb and the state of charge SOC of the battery 50, to detect the current input and output charge levels of the battery 50. The battery temperature Tb or the state of charge SOC of the battery 50 may be used for the same purpose.

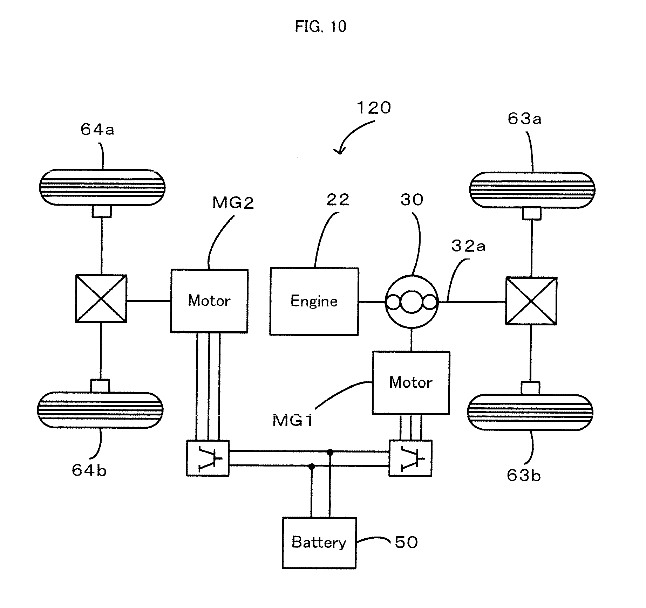

In the hybrid vehicle 20 of the embodiment, the power of the motor MG2 is subjected to gear change by the reduction gear 35 and is output to the ring gear shaft 32a. In one possible modification shown as a hybrid vehicle 120 of Fig. 10, the power of the motor MG2 may be output to another axle (that is, an axle linked with wheels 64a and 64b), which is different from an axle connected with the ring gear shaft 32a (that is, an axle linked with the wheels 63a and 63b).

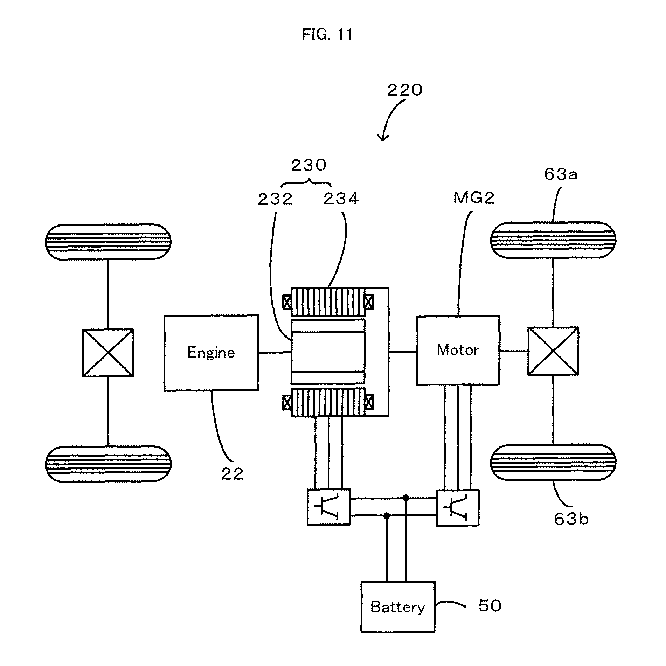

In the hybrid vehicle 20 of the embodiment, the power of the engine 22 is output via the power distribution integration mechanism 30 to the ring gear shaft 32a functioning as the drive shaft linked with the drive wheels 63a and 63b. In another possible modification of Fig. 11, a hybrid vehicle 220 may have a pair-rotor motor 230, which has an inner rotor 232 connected with the crankshaft 26 of the engine 22 and an outer rotor 234 connected with the drive shaft for outputting the power to the drive wheels 63a, 63b and transmits part of the power output from the engine 22 to the drive shaft while converting the residual part of the power into electric power.

The hybrid vehicle 20 of the embodiment is equipped with the engine 22, the power distribution integration mechanism 30, and the two motors MG1 and MG2. The technique of the invention is not restricted to the hybrid vehicle of this configuration but may be applied to hybrid vehicles of other configurations that drive an engine at an arbitrary drive point to satisfy a power demand and enable a motor to compensate for an insufficiency of power due to a delayed response of the engine. For example, a hybrid vehicle may be equipped with an engine, a variable speed transmission, for example, CVT, that has a crankshaft of the engine as an input shaft and a driveshaft linked to an axle as an output shaft, and a motor that is connected to input and output power from and to either of the crankshaft of the engine 22 and the driveshaft. The variable speed transmission may be replaced by a multiple-step transmission that is capable of changing the drive point of the engine 22 at sufficiently many steps.

The best mode of carrying out the invention discussed above is to be considered in all aspects as illustrative and not restrictive. There may be many modifications, changes, and alterations without departing from the scope or spirit of the main characteristics of the present invention. The scope and spirit of the present invention are indicated by the appended claims, rather than by the foregoing description.

**Industrial Applicability**

The technique of the invention is preferably applied to the manufacturing industries of power output apparatuses and motor vehicles and other relevant industries.

**Claims**

1.  A power output apparatus that outputs power to a driveshaft, said power output apparatus comprising:

   an internal combustion engine that has an output shaft and generates power;
   a power transmission mechanism that is connected with the output shaft of the internal combustion engine and with the driveshaft and transmits at least part of the power of the internal combustion engine to the driveshaft;
   a motor that is capable of inputting and outputting power from and to the driveshaft;
   an accumulator that transmits electric power to and from the motor; and
   a control device comprising a power demand setting module, a target drive point setting module, and a drive control module,

said power demand setting module setting a power demand to be output to the driveshaft,

said target drive point setting module setting a target drive point of the internal combustion engine based on a first restriction and the set power demand when a condition of the accumulator is within allowable input and output ranges that depend on rated values of the accumulator, while setting the target drive point of the internal combustion engine based on the set power demand and a second restriction having a smaller variation in rotation speed against a power change than the first restriction when the condition of the accumulator is out of the allowable input and output ranges,

said drive control module controlling the internal combustion engine, the power transmission mechanism, and the motor to drive the internal combustion engine at the set target drive point and to output a power equivalent to the set power demand to the driveshaft.

2. A power output apparatus in accordance with claim 1, wherein said target drive point setting module uses the second restriction of giving a higher rotation speed in a low power range rather than the first restriction to set the target drive point of the internal combustion engine.

3. A power output apparatus in accordance with claim 1, wherein said target drive point setting module uses the first restriction of enhancing an efficiency of the internal combustion engine to set the target drive point of the internal combustion engine.

4. A power output apparatus in accordance with claim 1, wherein said target drive point setting module uses at least one of input and output limits of the accumulator, a temperature of the accumulator, and a state of charge of the accumulator as the condition of the accumulator to set the target drive point of the internal combustion engine.

5. A power output apparatus in accordance with claim 1, wherein the power transmission mechanism transmits at least part of the power of the internal combustion engine to the driveshaft through input and output of electric power and mechanical power, and

the accumulator transmits electric power to and from the power transmission mechanism.

6. A power output apparatus in accordance with claim 5, wherein the power transmission mechanism comprises:

a three shaft-type power input output module that is linked to three shafts, the output shaft of the internal combustion engine, the driveshaft, and a rotating shaft, and inputs and outputs power from and to a residual one shaft based on powers input from and output to any two shafts among the three shafts; and

a generator that inputs and outputs power from and to the rotating shaft.

7. A power output apparatus in accordance with claim 5, wherein the power transmission mechanism comprises:

a pair-rotor motor that has a first rotor connected to the output shaft of the internal combustion engine and a second rotor connected to the driveshaft, and is driven to rotate through relative rotation of the first rotor to the second rotor.

8. A power output apparatus in accordance with claim 1, wherein the power transmission mechanism is a transmission that converts power of the output shaft of the internal combustion engine by gear change at a number of speeds or at continuously variable speed and outputs the converted power to the driveshaft.

9. A motor vehicle that is equipped with a power output apparatus in accordance with any one of claims 1 through 8 and has an axle mechanically linked with the driveshaft.

10. A control method of a power output apparatus, said power output apparatus comprising: an internal combustion engine that has an output shaft and generates power; a power transmission mechanism that is connected with the output shaft of the internal combustion engine and with the driveshaft and transmits at least part of the power of the internal combustion engine to the driveshaft; a motor that is capable of inputting and outputting power from and to the driveshaft; an accumulator that transmits electric power to and from the motor,

said control method comprising the steps of:

(a) setting a power demand to be output to the driveshaft,
(b) setting a target drive point of the internal combustion engine based on a first restriction and the set power demand when a condition of the accumulator is within allowable input and output ranges that depend on rated values of the accumulator, while setting the target drive point of the internal combustion engine based on the set power demand and a second restriction having a smaller variation in rotation speed against a power change rather than the first restriction when the condition of the accumulator is out of the allowable input and output ranges, and

(c) controlling the internal combustion engine, the power transmission mechanism, and the motor to drive the internal combustion engine at the set target drive point and to output a power equivalent to the set power demand to the driveshaft.

FIG. 1

FIG. 2

```
                    ┌──────────────────────┐
                    │ Drive Control Routine │
                    └──────────────────────┘
                               │
   ┌───────────────────────────────────────────────────┐
   │ Input Accelerator Opening Acc, Vehicle Speed V,    │
   │      Motor Rotation Speeds Nm1 and Nm2,            │    S100
   │ and Input and Output Limits Win and Wout of Battery│
   └───────────────────────────────────────────────────┘
                               │
   ┌───────────────────────────────────────────────────┐
   │  Set Torque Demand Tr* and Engine Power Demand Pe* │    S110
   │   Tr*=fe(Acc,V),   Pe*=Tr*×Nm2/Gr+Pb*+Loss        │
   └───────────────────────────────────────────────────┘
                               │                      S120
              ◇ Within Allowable Input and Output Ranges? ◇────── No
                          Yes        S130                 │  S140
   ┌──────────────────────────┐      ┌──────────────────────────┐
   │ Use Operation Curve in   │      │ Use Operation Curve under│
   │ Ordinary State to Set    │      │ Battery Restriction to   │
   │ Target Rotation Speed    │      │ Set Target Rotation Speed│
   │ Ne* and Target Torque    │      │ Ne* and Target Torque    │
   │ Te* of Engine            │      │ Te* of Engine            │
   │ Pe*=Ne*·Te*              │      │ Pe*=Ne*·Te*              │
   └──────────────────────────┘      └──────────────────────────┘
```

Use Operation Curve in Ordinary State to Set Target Rotation Speed Ne* and Target Torque Te* of Engine
$$Pe* = Ne* \cdot Te*$$

Use Operation Curve under Battery Restriction to Set Target Rotation Speed Ne* and Target Torque Te* of Engine
$$Pe* = Ne* \cdot Te*$$

Calculate Target Rotation Speed Nm1* and Torque Command Tm1* of Motor MG1
$$Nm1* = fm1(Ne*, Nm2/Gr)$$
$$Tm1* = \text{Previous } Tm1* + PID(Nm1, Nm1*)$$
S150

Calculate Lower Torque Restriction Tmin and Upper Torque Restriction Tmax
$$Tmin = (Win - Tm1* \cdot Nm1)/Nm2$$
$$Tmax = (Wout - Tm1* \cdot Nm1)/Nm2$$
S160

Calculate Tentative Motor Torque Tm2tmp
$$Tm2tmp = (Tr* + Tm1*/\rho)/Gr$$
S170

Set Torque Command Tm2* of Motor MG2
$$Tm2* = min(max(Tm2tmp, Tmin), Tmax)$$
S180

Send Target Rotation Speed Ne* and Target Torque Te* of Engine and Torque Commands Tm1* and Tm2* of Motors MG1 and MG2 to Relevant ECUs
S190

RET

FIG. 3

FIG. 4

FIG. 5

FIG. 6

FIG. 7

FIG. 8

Pe * = Constant

Torque Te

Operation Curve in Ordinary State

Te*

Operation Curve
under Battery
Restriction

Ne*

Rotation Speed Ne

FIG. 9

Target Rotation Speed Ne *

Under Battery Restriction

In Ordinary State

Pe1    Pe2    Engine Power Demand Pe *

FIG. 10

FIG. 11

## INTERNATIONAL SEARCH REPORT

| | |
|---|---|
| International application No. | |
| | PCT/JP2005/016316 |

**A. CLASSIFICATION OF SUBJECT MATTER**
*F02D29/02* (2006.01), *B60W20/00* (2006.01), *B60W10/06* (2006.01), *B60W10/08* (2006.01), *B60W10/26* (2006.01), *B60K6/04* (2006.01), *B60L11/14* (2006.01)

According to International Patent Classification (IPC) or to both national classification and IPC

**B. FIELDS SEARCHED**

Minimum documentation searched (classification system followed by classification symbols)
*F02D29/02* (2006.01), *B60W20/00* (2006.01), *B60W10/06* (2006.01), *B60W10/08* (2006.01), *B60W10/26* (2006.01), *B60K6/04* (2006.01), *B60L11/14* (2006.01)

Documentation searched other than minimum documentation to the extent that such documents are included in the fields searched
Jitsuyo Shinan Koho 1922-1996 Jitsuyo Shinan Toroku Koho 1996-2005
Kokai Jitsuyo Shinan Koho 1971-2005 Toroku Jitsuyo Shinan Koho 1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2004-11456 A (Toyota Motor Corp.), 15 January, 2004 (15.01.04), Par. Nos. [0003], [0033] to [0035], [0042]; Figs. 1, 6, 7 (Family: none) | 1-10 |
| A | JP 2001-211505 A (Nissan Motor Co., Ltd.), 03 August, 2001 (03.08.01), Par. Nos. [0007], [0047]; Fig. 5 & EP 1118492 A3 & US 6366838 B1 | 1-10 |
| A | JP 2000-87774 A (Toyota Motor Corp.), 28 March, 2000 (28.03.00), Par. Nos. [0075], [0083]; Figs. 1, 3, 5 & US 6437456 B1 | 1-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 October, 2005 (19.10.05) | 01 November, 2005 (01.11.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 1 795 726 A1**

| | | |
|---|---|---|
| **INTERNATIONAL SEARCH REPORT** | | International application No. |
| | | PCT/JP2005/016316 |

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2001-112115 A (Toyota Motor Corp.),<br>20 April, 2001 (20.04.01),<br>Par. Nos. [0004], [0047], [0049], [0053];<br>Figs. 10, 11<br>& EP 1090803 A3 & US 6637530 B1 | 1-10 |
| A | JP 09-224303 A (Nippon Soken, Inc.),<br>26 August, 1997 (26.08.97),<br>Par. No. [0012]; Fig. 6<br>& US 6007443 A | 1-10 |
| A | JP 09-193675 A (Equos Research Co., Ltd.),<br>29 July, 1997 (29.07.97),<br>Par. No. [0086]; Figs. 1, 23<br>(Family: none) | 1-10 |

Form PCT/ISA/210 (continuation of second sheet) (April 2005)